# EUROPEAN PATENT APPLICATION

(11) **EP 3 949 783 A1**
(43) Date of publication of application: **09.02.2022**
(21) Application number: 21190008.9
(22) Date of filing: 05.08.2021
(51) Int. Cl.: A43B 3/00, A43B 7/14, A43B 13/04, A43B 13/10, A43B 13/18, A43B 17/04, B29D 35/12

(54) **METHOD FOR MANUFACTURING A SEMI-FINISHED PRODUCT, IN PARTICULAR A SHOE SOLE AND SEMI-FINISHED PRODUCT OBTAINED**

(30) Priority: 06.08.2020 IT 202000019495
(71) Applicant: DA. MA. & Co S.r.l., 63812 Montegranaro FM (IT)
(72) Inventor: MAZZA, Emanuele, 63812 Montegranaro (FM) (IT); MAZZA, Dario, 63812 Montegranaro (FM) (IT)
(74) Representative: Fiume, Orazio

(57) **Abstract**

Method for manufacturing a shoe sole (S) comprising a step of hot molding a first portion (1) made of EVA (ethylene vinyl acetate) comprising an interlocking seat (H) and a subsequent phase of insertion by force, while the first portion is hot and expanded, of a second portion (2) in the seat, wherein the second portion has a complementary shape with the seat.

## Description

### Field of the invention

The present invention refers to the field of the production of EVA materials and in particular for the production of soles for shoes, footwear, EVA carpets.

EVA is an acronym that generally indicates a compound based on expandable and cross-linkable polyolefins commonly referred to as ethylene vinyl acetate (EVA).

In the context of the present invention, a semi-finished product can be meant not only as a product intended to be further processed or associated with other objects, but also a finished and complete product.

### Prior art

In the state of the art it is known that EVA (ethylene vinyl acetate) is a copolymer plastic material of ethylene and vinyl acetate, whose chemical composition is as follows (C2H4)n(C4H6O2)m.

The vinyl acetate content determines the mechanical properties of the copolymer. In the state of the art, soles, shoes and products in single-color, two-color and multicolored EVA are known. The single-color soles are obtained by molding in a single die.

The two-colored soles can be obtained by making a first portion of the semi-finished product, into which it is subsequently inserted into a second die into which EVA having a different color is injected. This technique is called "co-molding" and can be used essentially when the two or more portions to be attached are of the same material.

Components of a different nature can be attached to the EVA semi-finished product by attaching, that is to say by means of glues.

The elasticity of the EVA and environmental factors can lead the adhesives to lose their adhesion properties with the detachment of the added portions. Therefore, despite of the considerable efforts in offering increasingly reliable adhesives, the use of adhesives appears to be an unsatisfactory and certainly cumbersome technique from a production and logistical point of view. Furthermore, the EVA does not have a satisfactory mechanical resistance and therefore it is not possible to make threaded seats to couple screws of hard material therewith, as the seat is soon damaged by the screw.

### Summary of the Invention

Object of the present invention is to propose a semi-finished product made with EVA-based compounds, having added elements attached without using glue.

The basic idea of the present invention is to separately make at least two portions of a semi-finished product, for example a sole, in which at least one portion is made by molding an EVA-based compound containing an expanding additive with the temperature and made so as to define an insertion seat for the at least one further portion, while the at least one further portion is made by a separate production process and wherein the interconnection of the at least one further portion with the first portion is carried out by insertion while the first portion is warm and dilated.

Preferably, the insertion is made immediately after the molding of the first portion, and in particular at the end of the expansion process of the semi-finished product, as long as the semi-finished product is still hot, easily manipulated, therefore the at least one further portion is made prior to the first portion.

Advantageously, after the first portion has cooled, the at least one further portion is no longer separable from the first, except with mechanical actions that exceed the normal use of the semi-finished product.

For convenience, in the following description, the first portion is referred to as the "main portion" in which at least one seat is made to accommodate a corresponding further portion. This is defined as main because it defines the contours of at least a relevant part of the semi-finished product, such as a shoe sole, or another portion of the shoe, or a carpet, etc.

For example, the main portion can define the general outline of the entire semi-finished product, or a portion of it. For example, in the case of a shoe sole, the main part can define the plantar part or the back of a whole sole. For convenience, the at least one additional portion is referred to as an "insert".

Preferably, the insert can be made of rubber or thermoplastic polyurethane (TPU) or a metal alloy or a plastic material having a predetermined mechanical strength. The at least one further portion can be obtained in various ways including, molding, 3D printing, machining including cutting and milling.

Therefore, according to the present invention, an insert is therefore inserted under pressure inside a corresponding and complementary cavity of the main portion, as long as this is hot and dilated.

The semi-finished product thus obtained can be finished, if necessary, like any semi-finished product in EVA, but may have precise physical-mechanical characteristics typical of the material with which the insert is made. Advantageously, the insert can be chosen in relation to its physical characteristics and its positioning within the main portion.

For example, an insert of soft material can be arranged at the heel of a sole to cushion shocks. The seat obtained in the first portion may or may not pass through the thickness of the sole or it may be a blind opening.

For example, an insert of conductive material can be inserted at the plantar area of the sole so as to put the foot in electrical contact with the ground, allowing the dispersion of electrostatic charge.

The insert, in turn, can have a male or female portion of a coupling element, for example of the screw/nut type, in order to allow the semi-finished product to be connected to rigid elements in a stable and reliable way. For example, a car carpet or a shower carpet can be permanently associated with fixed and stable anchoring points.

The insert itself can be made with several layers of different materials, which can be mutually attached by fusion or gluing.

The dependent claims describe preferred variants of the invention forming an integral part of this description.

### Brief description of the figures

Further objects and advantages of the present invention will become clear from the following detailed description of an example of its embodiment (and its variants) and from the attached drawings given purely for explanatory and nonlimiting purposes, in which:

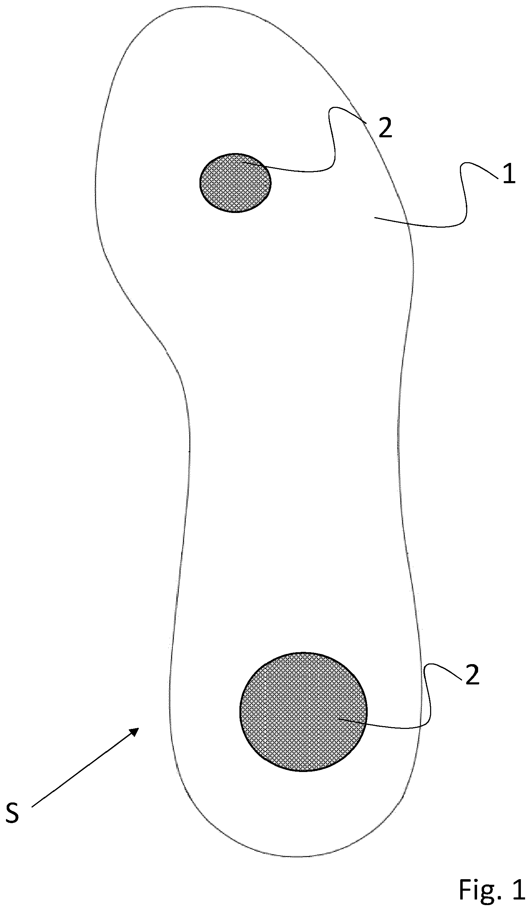

- Figure 1 shows a plan view of an example of a shoe sole according to the present invention;
- Figures 2 - 5 show insertion sequences of inserts of various shapes and sizes according to the present invention;
- Figure 6 shows a further exemplary variant of the present invention. The same reference numbers and letters in the figures identify the same elements or components;
- Figures 7 and 8 show variants of the invention in which the insert is used as an interconnection element of the semi-finished product in EVA with fixed points or additional rigid elements.

In the context of this description, the term "second" component does not imply the presence of a "first" component. These terms are in fact used as labels to improve clarity and should not be understood in a limiting way.

The elements and features illustrated in the various preferred embodiments, including the drawings, can be combined with each other without however departing from the scope of the present application as described below.

### Detailed description

According to the present invention, the EVA-based compound used for the production of a portion 1 of a semi-finished product S, for example a shoe sole, in which, during the molding of the first portion, at least a through or blind seat H is made where at least one insert 3 is inserted.

The insert can be of any material depending on the desired effect.

For example, a soft material insert can be useful in the heel area for heel prevention.

An insert in the plantar area and in the heel area can be provided to improve the abrasion resistance of the sole or to improve its grip with the ground.

The insert can be made of TPU, rubber, plastic, metal and alloys.

TPU is a thermomplastic material that can be processed both by molding and by deposition and can be conductive, therefore, some inserts can be suitably conductive to dissipate electrostatic charges.

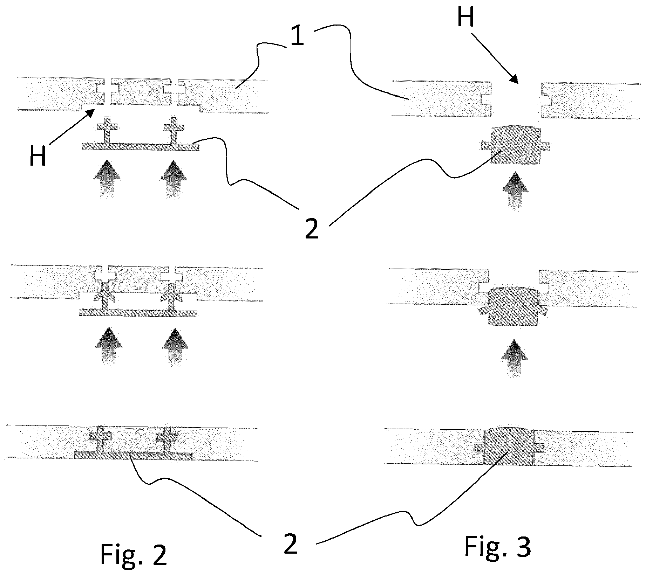

Figures 2 - 5 show, each, an inserting sequence of an insert into a main portion 1 of the sole S. Each sequence comprises three phases starting from a pre-assembly condition, a condition in which the insert is forced to engage in the relative seat H, and a final condition in which the insert is stably inserted in the respective seat H.

The insertion of the insert in its seat is favored by the fact that the EVA compound includes an expanding additive that allows the main portion 1 to expand due to the thermal effect. Preferably, the insertion of the insert is carried out immediately after the molding of the main portion 1, as long as the semi-finished product is still hot and dilated.

Preferably, the compound with which the main portion 1 is made comprises:
- 50% - 80% of copolymer in EVA with vinyl acetate which varies from 14% to 50%;
- 0% - 20% mineral filler intended as solid compounds, for example calcium carbonate, silica, talc;
- 0% - 20% other copolymer to be selected from the copolymers of ethylene (alkenes) such as octene, and hexene to be added in compensation to the vinyl acetate,
- 5% - 10% expanding additives such as for example peroxide, crosslinking agents, crosslinking co-agents, lubricants and pigments for coloring, in which the aforesaid percentages are by weight.

Once cooled, the EVA obtained for the manufacture of the main portion 1 of the sole S has a density ranging from 0.45 to 0.35 gr/cm3 and a hardness ranging from between 70 and 40 ShA.

The inserts 2 can have different shapes and can be inserted both from the face of the sole intended to contact the ground, and from the opposite face, as well as in the lateral surface of any flat semi-finished product.

It is worth noting that a shoe sole is normally flat, therefore it is immediate to understand what is meant by the faces of the sole. Furthermore, since the main portion itself defines at least the edges of a relevant portion of the sole, it is clear that the faces of the main portion coincide, net of the inserts, with the faces of the sole.

A label, printed on an insert, can be inserted perpendicular to the thickness of the sole in an at least blind seat.

In figure 2, the insert 2 includes two or more arrow-shaped stems, so as to easily fit into the seats H and remain stably stuck there, especially after the main portion 1 has cooled.

The body of the insert is substantially flat and intended to remain visible and accessible from the face of the sole intended to contact the ground.

This insert can be made of a material that improves abrasion resistance or the grip of the sole with the ground.

Therefore, in general it can be said that the insert can comprise an approximately flat portion and an elongated insert element with complementary projections with the seats H which, by defining undercuts, naturally prevent the insert from being removed.

In figure 3 the insert has a squat shape with a protruding annular part and complementary with the seat H defined in the main portion. This insert is substantially symmetrical with respect to a medial plane of the plate defining the sole, so that it can be inserted from any of the two faces in any of the two directions.

This type of insert can be particularly useful for better cushioning the heel area and preventing or relieving heels.

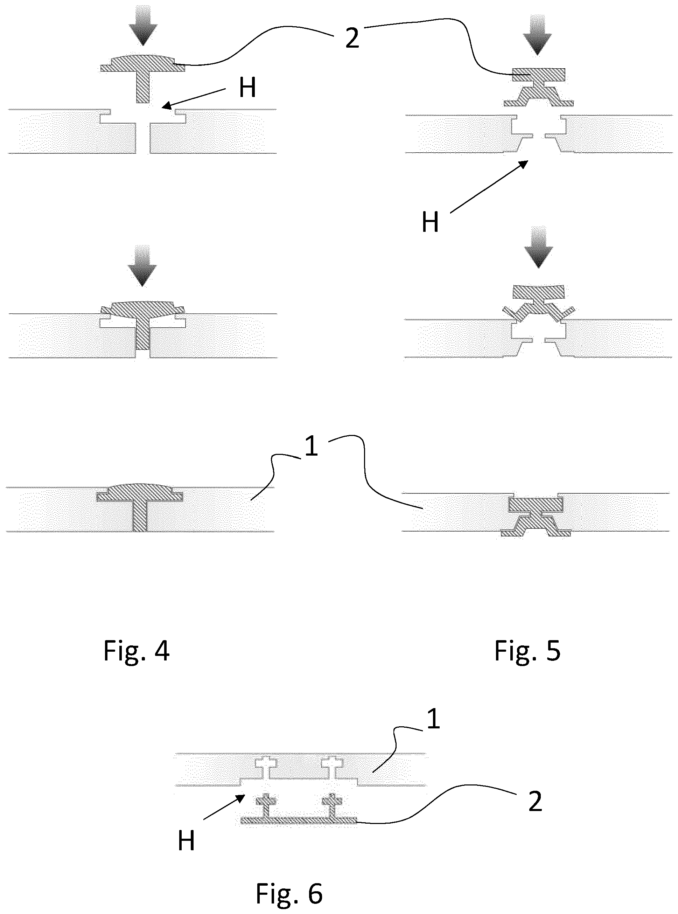

The insert in figure 4 is of the poppet type and therefore does not have symmetry with respect to the medial plane of the plate defining the sole, moreover it is inserted from the face of the sole intended to contact the foot of a user.

Also in this case, this type of insert can be useful for the prevention and treatment of heel inflammations.

The insert in figure 5 is also shaped to be inserted from the face of the sole intended to contact the foot of a user. The insert has an upper cylindrical portion to which an anchoring part is fixed, which, in operating conditions, projects from the face intended to contact the ground.

According to a plan view, the insert can have any shape: circular, oval, triangular, quadrangular, etc..

The insert can protrude from the upper face intended to contact the user's foot and/or from the lower face intended to contact the ground, or it can be suitably convex and introverted.

The insert can be formed by portions of different material, for example a sandwich whose layers are mutually glued, or it can comprise two portions, one having a greater surface in contact with the ground or with the user's foot, and an elongated portion intended for coupling with or anchoring in the respective seat H.

The seat H can have a completely complementary shape as in the case of the examples of figures 2 and 3 with the insert, or it can have a shape that is only partially complementary as in the examples of figures 4 and 5.

The inserts can have any color and any nature, therefore, by inserting one or more inserts, the sole substantially in EVA has more colors without using glues or the co-molding technique.

The die for making an EVA sole includes a die and a counter die.

It is worth noting that EVA being very soft and easily deformable while hot, undercuts can be created that would not be admissible in the case of rigid materials for the purpose of extracting the semi-finished product from the die. The process for molding a main portion 1 of the semi-finished product S made with an EVA compound requires that the compound, in the liquid state, to be injected into the hot die. The temperatures, pressures, speeds and injection times are known to those skilled in the art.

The quantity of liquid material to be inserted into the die varies according to known proportions according to the semi-finished product to be obtained. When the die is opened, the semi-finished product tends to expand until it reaches a larger size than the final one after the cooling process and its shrinkage.

As long as the semi-finished product is hot, the insert is inserted through appropriate pressure into the cavity which is dilated.

The seal of the insert inside the cavity is ensured thanks to its shape but also thanks to the shrinkage resulting from the cooling and the intrinsic compliance of the EVA.

The seal of the insert in the main portion is ensured as the insert is preferably fitted with an undercut coupling in the respective seat.

Figure 6 shows a further variant of the present invention in which the seat H is not passing through but blind.

It is worth noting that the inserts can be inserted perpendicular to the thickness of the sole. In this case it is evident that the seats H are blind.

Inserts arranged perpendicular to the thickness, rather than perpendicular to the opposite faces of the sole, can be useful for aesthetic reasons but also to indicate particular characteristics of the sole, for example a certain color can indicate a characteristic of another insert intended to contact the ground and/or the user's foot.

Advantageously, since the use of adhesives is not envisaged, a main advantage is that the realization of the semi-finished product without the use of adhesives turns out to be a more eco-sustainable process.

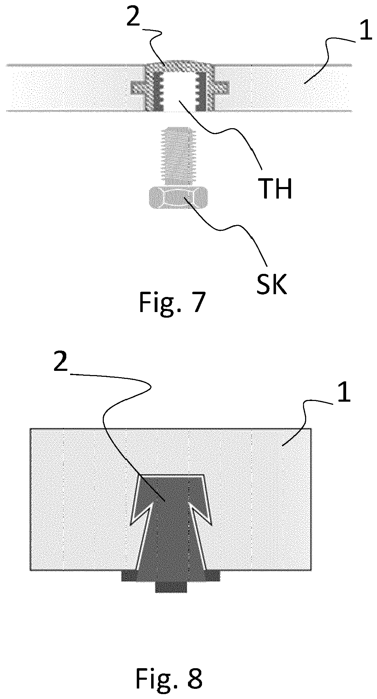

Figure 7 shows an evolution of any of the embodiments shown in Figures 2 - 6.

For example in the insert of Figure 3, made of hard plastic, or a metal alloy or a composite material, a threaded hole TH is made to which it is possible to associate a screw SK.

Figure 8 shows a similar solution in which the insert 2 protrudes externally from the main portion 1 to allow the connection of this to another. For example, Figure 8 shows a knock-block limit switch for the door leaf, or for the seat of a toilet, etc

It is clear that the present solution allows for the creation of a complex EVA product that can be associated with a fixed point or with an additional component having a much greater stiffness than EVA. Without the use of the present invention, the EVA material would easily detach from the component having greater stiffness, causing damage.

## Claims

1. Method for manufacturing a semi-finished product (S), in particular a shoe or shoe sole, comprising a step of hot molding a first portion (1) made of EVA (ethylene vinyl acetate) comprising an interlocking seat (H) and a subsequent phase of insertion by force, while the first portion is hot and expanded, of a second portion (2) in the seat, wherein the second portion has a complementary shape with the seat such as to remain embedded in it.

2. Method according to claim 1, wherein the second portion is made of rubber or TPU (thermoplastic polyurethane) or plastic or metal and its alloys.

3. Method according to any of the preceding claims, wherein the force insertion phase is carried out immediately after extraction of the first portion from a relative die, as long as the first portion is hot.

4. Method according to any one of the preceding claims, wherein the EVA is added with at least one expanding additive and a crosslinking coagent.

5. Method according to any of the previous claims, wherein the EVA includes 50% - 80% of EVA copolymer with vinyl acetate which varies from 14% to 50%;
- 0% - 20% mineral filler consisting of at least one solid compound chosen from calcium carbonate, silica, talc,
- 0% - 20% other copolymer to be selected from the copolymers of ethylene (alkenes) such as octene, and hexene to be added in compensation to vinyl acetate, and wherein said expanding additive is between 5% -10%,
wherein the above percentages are by weight.

6. Method according to any one of claims 1 to 5, wherein said second portion comprises an approximately flat body and at least one longitudinal element having lateral projections complementary with the seat (H) shape, the seat having undercuts arranged to prevent the longitudinal element from being disconnected.

7. Method according to any one of claims 1 to 5, the insert has a squat shape with a protruding annular part and complementary with the seat (H) obtained in the first portion (1).

8. Method according to any one of the preceding claims 1 to 7, wherein said seat consists of a passing through opening, through a thickness of the first portion, so that under operating conditions, the second portion is at least visible from both opposite faces of the semi-finished product (S).

9. Method according to any one of the preceding claims 1 to 8, wherein said seat consists of a blind opening so that the second portion is at least visible only from a face and/or lateral surface of the sole.

10. Method according to any one of the preceding claims, wherein the second portion, under operating conditions, forms a convexity or protrudes with respect to a face or lateral surface of the first portion.

11. Method according to claim 10, wherein the material of the surface of the second portion which protrudes from the face of the first portion is chosen to improve the comfort of a user or to improve the adhesion of the sole with the ground.

12. Method according to any one of the preceding claims, wherein said second portion (2) comprises a male or female element respectively projecting towards the outside of the semi-finished product or accessible from the outside of the semi-finished product, to associate the semi-finished product to a fixed point or to a further element having a greater mechanical stiffness than the first portion made of EVA.

13. Semi-finished product (S), in particular a shoe sole or a shoe, a carpet, comprising a first portion (1) made of EVA (ethylene vinyl acetate) comprising at least one interlocking seat (H) in which a second portion (2) is stably inserted.

14. Semi-finished product (S) according to claim 13, defining a sole, wherein said second portion (2) is monolithic.

15. Semi-finished product (S) according to any one of claims 13 or 14, wherein said seat is passing through or blind.
